# EUROPÄISCHE PATENTSCHRIFT

(11) **EP 3 799 522 B1**
(45) Veröffentlichungstag und Bekanntmachung des Hinweises auf die Patenterteilung: **14.05.2025**
(21) Anmeldenummer: 20197520.8
(22) Anmeldetag: 22.09.2020
(51) Int. Cl.: H05B 3/00, H05B 3/03, B29C 65/00

(54) **VERFAHREN UND VORRICHTUNG ZUR ELEKTRISCHEN WIDERSTANDSERWÄRMUNG**
METHOD AND DEVICE FOR ELECTRICAL RESISTANCE HEATING
PROCÉDÉ ET DISPOSITIF DE CHAUFFAGE À RÉSISTANCE ÉLECTRIQUE

(30) Priorität: 26.09.2019 DE 102019126027
(43) Veröffentlichungstag der Anmeldung: 31.03.2021
(73) Patentinhaber: Emeis, Georg, 22397 Hamburg (DE)
(72) Erfinder: Emeis, Georg, 22397 Hamburg (DE)
(74) Vertreter: Hansen, Jochen

(56) Entgegenhaltungen:
- EP-A1- 0 343 375
- EP-B1- 0 343 375
- DE-A1- 102018 101 845
- US-B1- 6 459 064

## Beschreibung

Die Erfindung betrifft ein Verfahren und eine Vorrichtung zur elektrischen Widerstandserwärmung eines elektrisch leitfähigen, flächigen Materials, insbesondere Blech, und zum thermischen Direktfügen eines Kunststoffbauteils auf das erwärmte, flächige Material, bei dem eine erste und eine zweite Elektrode mit einem Freiraum voneinander beabstandet auf einer Oberfläche des flächigen Materials aufgesetzt werden und ein elektrischer Strom über die erste und zweite Elektrode zur Erwärmung des Materials in das Material einleitbar ist. Derartige Verfahren und Vorrichtungen sind in unterschiedlicher Gestaltung im Stand der Technik bekannt.

Aus der DE 1 049 511 sind ein Verfahren und eine Vorrichtung zum Auflöten von Hartmetallplättchen bzw. Aufschweißen von Schnellstahlplättchen auf Werkzeuge durch elektrische Widerstandserwärmung bekannt. Dabei wird das räumliche Werkzeug zwischen drei Elektroden eingespannt und unter dreiphasiger Belastung eines angelegten Drehstromes erwärmt. Zwischen allen drei Elektroden steht eine regelbare Spannung, sodass durch Schalten der zwischen je zwei Elektroden fließenden Ströme die Stromverteilung im Werkzeug reguliert werden kann.

In der DE 10 2013 011 572 A1 ist ein Verfahren zur lokalen und verzugsfreien Wärmebehandlung von Blech- oder blechartigen Bauteilen durch lokale Widerstandserwärmung beschrieben, bei dem beidseitig des zu erwärmenden Bleches zwei relativ zur Materialstärke des Bleches große Elektroden auf die beidseitig freien Oberflächen aufgepresst werden, sodass eine im Wesentlichen verzugsfreie und sehr gleichmäßige Erwärmung des Bleches im Bereich der Elektroden erreicht wird, wobei der Stromfluss senkrecht zur vom Blech aufgespannten Ebene verläuft.

Ferner ist aus der DE 10 2016 102 846 A1 ein Verfahren sowie System zum Verbinden von Komponenten durch Wärmekontaktnieten bekannt. Dabei wird eine Niet-artige Verbindung von zwei verschiedenen Materialien, bspw. einem Kunststoff und einem Blech beschrieben, wobei ein an dem Kunststoffmaterial vorgesehener Vorsprung beim Verbinden durch ein Loch geführt und anschließend von einer Stempelanordnung mit zwei jeweils einen Halbkreisring einer kreisringförmigen Anordnung ausgebildeten zwei Elektroden mittels Widerstandserwärmen plastisch erwärmt und mittels eines stempelartigen Schaftes innerhalb der kreisringförmigen Elektrode zu einem Nietkopf verformt wird, um somit die dauerhafte Verbindung beider Materialien sicher zu stellen.

Die DE 30 25 875 A1 zeigt eine Vorrichtung zur Reparatur von Leiterbahnunterbrechungen auf Leiterplatten durch Mikro-Widerstandsschweißen mit drei Elektroden, bei der in der ersten Elektrode ein Freiraum in Form einer Bohrung für einen Vakuumanschluss zum Ansaugen eines Formteils vorgesehen ist. Konzentrisch um diese erste Elektrode sind zwei Außenelektroden angeordnet, die mit zwei Stromimpulsquellen verbunden sind. Damit wird nun für die Reparatur einer Leiterbahnunterbrechung ein für die jeweilige Unterbrechung spezifisches Formteil aus Folienband ausgestanzt, wobei die innere Elektrode (erste Elektrode) mittels Saugluft durch die Bohrung dieser Elektrode das ausgestanzte Formteil auf der Reparaturstelle mittels der voreilenden Innenelektrode hält. Die nacheilenden Außenelektroden kontaktieren jeweils die Enden des Formteils, womit dann eine elektrische Widerstandserwärmung erfolgt.

Die DE 10 2018 101 845 A1 beschreibt die Möglichkeit einer Widerstandserwärmung einer elektrisch leitfähigen Oberfläche, die für eine durchgreifende Verbindung zweier geschichteter Werkstoffe durch ein dafür vorgesehenes Befestigungselement ausgebildet ist. Die Elektrodenanordnung enthält dabei zwei halbringförmig angeordnete und voneinander isolierte Elektroden. Das Befestigungselement wird dann durch die erwärmte Oberfläche hindurch gedrückt und dient der Verankerung auf dem geschichteten Werkstück.

Aus der EP 0 343 375 A1 ist ein Verfahren zur Reparatur von Leiterbahnunterbrechungen bekannt. Dabei wird eine Isolierfolie mit Arbeitsfenstern sowie ein Formteilnutzen auf der zu reparierenden Leiterbahn mit einem dort zu verbindenden Formteil passgenau aufgelegt und mittels eines ersten Elektrodensystems mittels Widerstandserwärmung mit der Leiterbahn verbunden und durch ein zweites Elektrodensystem aus dem Formteilnutzen herausgetrennt.

Die US 6 459 064 B1 beschreibt ein Verbindungsverfahren für elektrisch leitfähige Teile durch Erhitzen mit elektrischem Strom. Dabei werden zwei Elektroden mit unterschiedlicher Polarität in Richtung der zu montierenden Teile vorgeschoben und diese Elektroden mit mindestens einer der zu montierenden Teile in Kontakt gebracht, wobei Strom an die Elektroden angelegt wird. Auf diese Weise werden die elektrisch leitenden Bauteile durch den Strom, der sie durchfließt, um von einer Elektrode zur anderen zu gelangen, lokal erwärmt und zusammengefügt. Dabei kann eine Elektrode ringförmig um die andere Elektrode angeordnet werden.

Aus der US 4,910,376 A ist eine Schweißelektrodenanordnung mit einer inneren Elektrode und einer Mehrzahl von elektrisch miteinander verbundenen äußeren Elektroden, die eine geschlossene Form um die innere Elektrode herum festlegen, bekannt.

Aufgabe der Erfindung ist es, ausgehend von den bekannten elektrischen Widerstanderwärmungsverfahren und -vorrichtungen ein Verfahren und eine Vorrichtung zur elektrischen Widerstandserwärmung anzugeben, bei dem bzw. der ein elektrisch leitfähiges, flächiges Material in einem kleinen begrenzten Bereich sehr gleichmäßig erwärmt und gleichzeitig die Möglichkeit eines Zugriffes auf diesen erwärmten Bereich gegeben wird.

Gelöst wird diese Aufgabe mit einem Verfahren gemäß Anspruch 1 und einer Vorrichtung gemäß Anspruch 5.

Dadurch, dass mit wenigstens einer weiteren Elektrode, die alle in einer Elektrodenanordnung um den Freiraum verteilt und auf der einen Oberfläche auf dem flächigen Material aufgesetzt angeordnet sind, das flächige Material erwärmt wird, wobei unterschiedliche Elektrodenkonstellationen der wenigstens drei Elektroden jeweils paarweise abwechselnd mit dem elektrischen Strom beaufschlagt werden, und über den Freiraum ein Kunststoffbauteil auf das erwärmte, flächige Material zum thermischen Direktfügen dieses Kunststoffbauteils darauf zugeführt wird, wird das flächige Material im Bereich des Freiraums in der Elektrodenanordnung sehr gleichmäßig erwärmt. Dabei können bei beispielsweise drei Elektroden genau drei verschiedene Elektrodenkonstellationen, nämlich genau örtlich zugeordnete Elektrodenpaare mit dem elektrischen Strom beaufschlagt werden. Dies ist einmal der Bereich zwischen der ersten und zweiten Elektrode, ein weiteres Mal der Bereich zwischen der zweiten und dritten Elektrode und schließlich der Bereich zwischen der dritten und ersten Elektrode. Bei vier Elektroden können insgesamt sechs Elektrodenkonstellationen aus jeweils paarweise mit elektrischem Strom beaufschlagten Elektroden von einer entsprechenden Schaltung ausgewählt werden. Dabei können bei einer umlaufend nummerierten Elektrodenanordnung zunächst die gegenüber liegenden Elektroden, also die erste Elektrode mit der dritten Elektrode sowie danach die zweite Elektrode mit der vierten Elektrode und danach Randbereiche der flächigen Materials im Freiraum durch Strombeaufschlagung der ersten Elektrode mit der zweiten Elektrode, der dritten Elektrode mit der vierten Elektrode usw. durchgeführt werden. Bei gegenüberliegenden Elektroden wird dann der Zentralbereich des beispielsweise als Kreisfläche ausgebildeten Freiraums durch den hierdurch geleiteten Stromfluss erwärmt, wohingegen bei nebeneinanderliegenden, angesteuerten Elektroden insbesondere der Randbereich erwärmt wird.

Über den Freiraum wird ein Kunststoffbauteil auf das erwärmte, flächige Material zum thermischen Direktfügen dieses Kunststoffbauteils darauf zugeführt. Durch die Ausbildung der Elektrodenanordnung mit dem innen liegenden Freiraum kann parallel zum elektrischen Widerstandserwärmen des flächigen Materials ein aufzufügendes Kunststoffbauteil, beispielsweise ein Kunststoffbolzen gezielt bei Erreichen der optimalen Fügetemperatur zugeführt und im thermischen Direktfügen auf dem flächigen elektrisch leitfähigen, metallischen Material, insbesondere Blech aufgefügt werden. Es ist dabei nicht erforderlich, die Elektrodenanordnung vom Blech zu entfernen. Vielmehr kann während des Fügevorgangs zeitlich parallel eine weitere elektrische Widerstandserwärmung erfolgen, um eine qualitativ hochwertige Fügeverbindung zu erzielen. Insgesamt kann das flächige Material durch die anmeldungsgemäße Elektroden-Anordnung im Bereich des Freiraums sehr gleichmäßig erwärmt werden, womit optimale Fügetemperaturen zum thermischen Direktfügen von Kunststoffbauteilen auf diesem flächigen, erwärmten Material erreicht und aufrechterhalten werden.

Entsprechend zeichnet sich die Erfindung vorrichtungsgemäß dadurch aus, dass weitere, voneinander elektrisch getrennte Elektroden in einer ringförmigen Elektrodenanordnung um den Freiraum angeordnet sind, und der Freiraum normal zum flächigen Material einen freien Zugang zur Oberfläche des flächigen Materials in diesem Bereich erlaubt. Dabei bedeutet ringförmige Elektrodenanordnung, dass die wenigstens drei Elektroden um ein Zentrum, nämlich einen Freiraum, herum angeordnet sind, dabei kann die Ringform dreieckig, viereckig, fünfeckig, sechseckig etc. sein oder insbesondere eine reguläre Polygonform oder kreisrunde oder annähernd kreisrunde, elliptische Form aufweisen. Bei einer bevorzugt kreisringförmigen oder regulär vieleckförmigen Elektrodenanordnung kann somit ein zum Mittelpunkt vollständig rotationssymmetrischer Aufbau der Elektrodenanordnung und aufgrund der verschieden ansteuerbaren Elektrodenpaare eine sehr gleichmäßige Erwärmung im Bereich des Freiraums im flächigen Material durch elektrische Widerstanderwärmung erzeugt werden. Dabei kann beispielsweise über den Freiraum auch eine Temperaturbeobachtung durch entsprechende Sensoren (beispielsweise Infrarot-Temperatursensoren) erfolgen, sodass die jeweilig ausgewählte Elektrodenkonstellation, deren Anschaltdauer sowie ggf. auch deren Stromversorgung anhand der gemessenen Temperaturen/Temperaturverteilung auf der Kreisfläche des Freiraums angesteuert und/oder geregelt werden können.

Wenn der Wechsel zwischen verschiedenen Elektrodenkonstellationen in Zeitintervallen von 10⁻⁷ s bis 1 s, insbesondere 10⁻⁵ s bis 10⁻² s durchgeführt wird, wird jeweils die Stromflussverbindungsstrecke zwischen den beiden Elektroden der gerade angesteuerten Elektrodenkonstellation nur für einen relativ kurzen Zeitraum erwärmt, sodass eine Überbeanspruchung (zu große, ggf. partielle Erhitzung) vermieden wird. Durch Umschalten auf eine andere Elektrodenkonstellation wird nachfolgend der Stromfluss über einen anderen Materialbereich geführt, sodass insgesamt eine thermische Überlastung des flächigen Materials bei gleichzeitig sehr gleichmäßiger Erwärmung des betreffenden Flächenbereichs erreicht wird.

Wenn zum thermischen Direktfügen des Kunststoffbauteils ein elektrischer Strom von 200 A bis 5000 A bei einer niedrigen Spannung von unter 10 V für 0,5 s bis 10 s über die verschiedenen Elektrodenkonstellationen dem flächigen Material angelegt werden, wird eine schonende und gleichmäßige, aber auch intensive Erwärmung des Fügebereichs im Bereich des Freiraums im flächigen Material (Blech) erzielt, der genau auf die Verwendung beim thermischen Direktfügen von Kunststoffbauteilen ausgerichtet ist.

Selbstverständlich kann bei sehr kurzen Impulsen auch ein deutlich höherer Strom fließen, wie beispielsweise 10.000 A oder mehr. Ferner ist es auch möglich, dass die Ausgangsspannung an einer entsprechenden Versorgungseinheit auch Spannungen von 70 bis 80 V aufweisen kann. Dabei ist die an der zu erwärmenden Materialoberfläche anliegende effektive Spannung jedoch deutlich niedriger.

Um den elektrischen Kontakt der Elektroden auf dem flächigen Element (Blech) zu gewährleisten, wird die Elektrodenanordnung auf dem flächigen Material aufgepresst.

Dabei erlaubt der Freiraum normal zum flächigen Material einen freien Zugang zum flächigen Material in diesem Bereich. Durch den freien Zugang über den Freiraum normal zum flächigen Material kann die elektrische Widerstanderwärmung beispielsweise durch Infrarot-Temperatursensoren quasi aus der Ferne überwacht werden. Darüber hinaus ist es möglich, dass auf das flächige Material aufzufügende Kunststoffbauteile, wie beispielsweise Kunststoffbolzen präzise dem gewünschten Fügeort zugeführt werden können. Dabei ist parallel durch die ringförmige Elektrodenanordnung weiterhin eine elektrische Widerstandserwärmung möglich. Der thermische Direktfügevorgang wird somit präziser und qualitativ überwachbar.

Wenn die Elektrodenanordnung kreisringförmig ausgebildet ist, wobei die einzelnen Elektroden segmentiert und voneinander elektrisch isoliert in dieser Elektrodenanordnung aufgenommen sind, wird eine zur Normalrichtung auf die Oberfläche des flächigen Materials vollständig rotationssymmetrische Elektrodenanordnung angegeben, womit eine ideal gleichförmige Erwärmung des flächigen Materials im Bereich des Freiraums durch die elektrische Widerstandserwärmung möglich ist.

Für die Stromversorgung der Elektrodenanordnung ist eine Steuer- und Versorgungseinheit vorgesehen, die beispielweise aus einem Stromumrichter/ Inverter und einem nachgeschalteten Transformator mit Gleichrichtereinheit am Ausgang besteht. Alternativ kann die Steuer- und Versorgungseinheit auch eine Phasenanschnittssteuerung mit nachgeschaltetem Trafo aufweisen. Dabei ist es möglich, dass der Trafo auch direkt an der Elektrodenanordnung verbaut ist und somit Bestandteil einer Handhabungsvorrichtung für die Elektrodenanordnung, beispielweise in Pistolenform, ist. Alternativ kann der Trafo auch in einer gesonderten Einheit angeordnet sein, wobei dann eine entsprechend ausgelegte Versorgungsleitung zur Elektrodenanordnung führt.

Dadurch, dass die Elektrodenanordnung 4 bis 24 Elektroden, insbesondere 6 bis 12 Elektroden aufweist, können eine Vielzahl von Elektrodenkonstellationen durch die zur Stromversorgung der Elektrodenanordnung ausgelegte Steuer- und Versorgungseinheit gewählt werden, um auch bei komplizierten Bauteilen, ggf. mit asymmetrisch vorhandenen Temperatursenken, eine gleichmäßige Erwärmung im Bereich des Freiraums im flächigen Material sicherstellen zu können. In besonders bevorzugter Ausbildung wird während der elektrischen Widerstandserwärmung über den freien Zugang oberhalb des Freiraums die Oberflächentemperatur des flächigen Materials gemessen, um bei etwaigen Temperaturanomalien/-ungleichheiten durch Verändern der Elektrodenkonstellation eine gleichmäßige Erwärmung durch entsprechende Regelkreise ermöglichen zu können.

Wenn die Elektroden in der Elektrodenanordnung federnd gelagert sind, können Fehlstellungen der Elektroden oder etwaige Oberflächenformen des flächigen Materials, beispielsweise gewölbte Bleche etc. so ausgeglichen werden, dass jede Elektrode bei entsprechendem Anpressdruck der gesamten Elektrodenanordnung auf das flächige Material im Wesentlichen vollflächig auf dem flächigen Material (Blech) aufliegt und somit eine gute Ankopplung des elektrischen Stromes erlaubt, um insbesondere ein lokales Überhitzen an den Kontaktstellen durch zu schlechten elektrischen Kontakt vermeiden zu können.

Nachfolgend wird ein Ausführungsbeispiel anhand der beiliegenden Zeichnungen ausführlich erläutert.

Darin zeigt:
- Fig. 1: eine Ansicht auf eine Elektrodenanordnung und
- Fig. 2: eine Vorrichtung zur elektrischen Widerstandserwärmung mit der in Fig. 1 dargestellten Elektrodenanordnung in schematischer Seitenansicht.

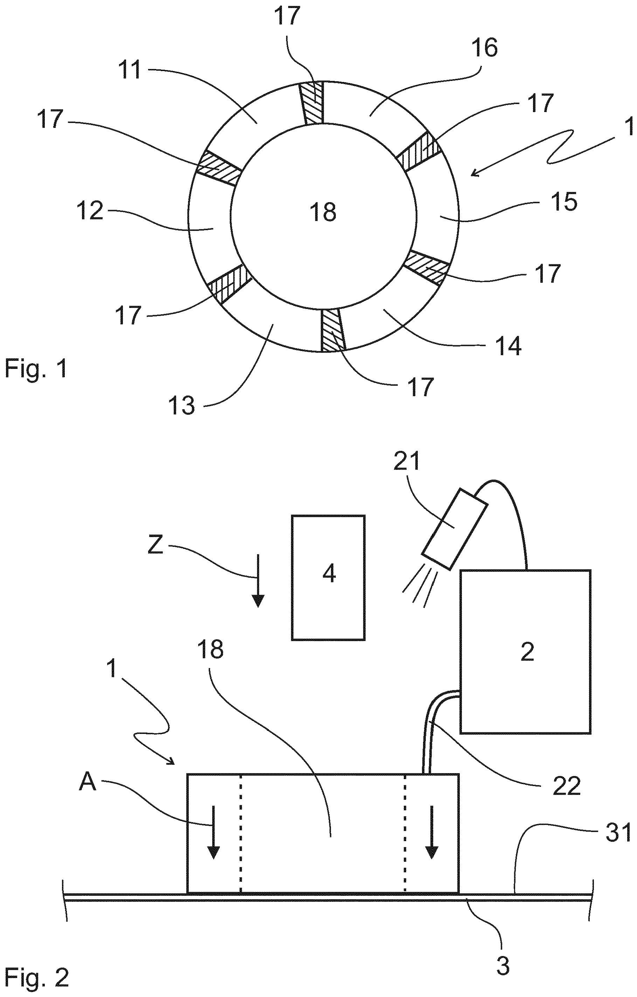

In Fig. 2 ist in schematischer Seitenansicht eine Vorrichtung zur elektrischen Widerstandserwärmung eines elektrisch leitfähigen, flächigen Materials 3, hier ein Blech in einem Ausschnitt, dargestellt. Das flächige Material (Blech) 3 weist wenigstens eine frei zugängliche Oberfläche 31 auf, die hier in Fig. 2 nach oben zeigt. Das elektrisch leitfähige Material 3 kann auf der anderen Seite (gegenüberliegend der Oberfläche 31) unzugänglich sein, beispielsweise mit Verstrebungen oder sonstigen angesetzten Bauteilen belegt sein. Wichtig ist, dass an der freien Oberfläche 31 ein Bereich für eine Elektrodenanordnung 1 zugänglich ist, die unmittelbar auf die Oberfläche 31 des Bleches 3 unter einem Anpressdruck A aufgelastet werden kann.

Diese Elektrodenanordnung 1 ist in Fig. 1 in einer Ansicht dargestellt, die unmittelbar auf die Oberfläche 31 des Bleches 3 aufsetzbar ist. Die Elektrodenanordnung 1 gemäß dem hier dargestellten Ausführungsbeispiel weist sechs gleichartig ausgebildete, segmentierte Elektroden, nämlich eine erste Elektrode 11, eine zweite Elektrode 12, eine dritte Elektrode 13, eine vierte Elektrode 14, eine fünfte Elektrode 15 und eine sechste Elektrode 16 auf, die gleich beabstandet voneinander in Kreisringform um einen Freiraum 18 angeordnet sind. Zwischen den Elektroden 11 bis 16 ist jeweils ein Isolator 17 zur elektrischen Isolierung zwischen den Elektroden vorgesehen. Die Elektroden 11 bis 16 sind bevorzugt federnd gelagert, um etwaige Fehlstellungen der Elektroden bzw. Unebenheiten oder Wölbungen der Oberfläche 31 des Bleches 3 ausgleichen und dabei eine großflächige Kontaktierung jeder einzelnen Elektrode 11 bis 16 auf der Oberfläche 31 des Bleches 3 sicherstellen zu können.

Die Elektrodenanordnung 1 wird dabei entweder von einem Bediener oder von einer Maschine, beispielsweise einem Roboter oder Kraftzylinder, auf die Oberfläche 31 des Bleches 3 entsprechend Anpressdruck A angepresst, um an den Kontaktstellen der Elektroden 11 bis 16 mit der Oberfläche 31 unerwünscht hohe Übergangswiderstände und somit punktuelle Überhitzungen und etwaige Verzunderungen zu vermeiden.

Die Elektrodenanordnung 1 ist dabei von einer Steuer- und Versorgungseinheit 2 über eine Steuer- und Versorgungsleitung 22 versorgt und angesteuert. Dabei ist jede der Elektroden 11 bis 16 einzeln von der Steuer- und Versorgungseinheit 2 auswählbar, um für die jeweils durchzuführende elektrische Widerstandserwärmung eine optimale Wärmeverteilung im Bereich des Freiraums 18 der Elektrodenanordnung 1 im elektrisch leitfähigen Material (Blech) 3 zu ermöglichen. Ferner ist es bevorzugt, dass die Steuer- und Versorgungseinheit 2 mit einem Temperatursensor 21 wirkverbunden ist, der die Temperatur der im Freiraum 18 freilegenden Kreisfläche der Oberfläche 31 des Bleches 3 erlaubt. Dieser Temperatursensor 21 ist beispielsweise ein Infrarot-Sensor, der die Temperatur an der Oberfläche 31 in diesem Bereich berührungslos messen kann.

In weiterer Ausbildung der Erfindung wird die Vorrichtung zur elektrischen Widerstandserwärmung zum Direktfügen von Kunststoffbauteilen 4 auf dem elektrisch leitfähigen Material (Blech) 3 verwendet. Mit diesem thermischen Direktfügen kann beispielsweise, ein als Kunststoffbolzen ausgebildetes Kunststoffbauteil 4 in Zufuhrrichtung Z in den Freiraum 18 und somit auf die durch die elektrische Widerstandserwärmung erwärmte Oberfläche 31 des Bleches 3 mit dem Blech 3 verbunden werden.

Für dieses thermische Direktfügen von Kunststoffbauteilen 4 auf metallischen Blechen 3 werden von der Steuer- und Versorgungeinheit 2 bevorzugt Strombereiche zwischen 200 A und 5000 A bei einer relativ niedrigen Spannung von wenigen Volt (Leerlaufspannung meist bei 8 V, die im Prozess noch geringer ist) über einen Zeitraum von 0,5 bis 10 s verwendet. Dabei wird jedoch der Stromfluss in kurzen Zeitintervallen jeweils über eine Elektrodenkonstellation, beispielsweise von der ersten Elektrode 11 zur vierten Elektrode 14, dann von der zweiten Elektrode 12 zur fünften Elektrode 15 usw. angelegt, wobei auch bei Bedarf nur benachbarte Elektroden oder die erste Elektrode 11 mit der dritten Elektrode 13 oder die fünfte Elektrode 15 mit der sechsten Elektrode 16 ausgewählt, um die jeweiligen Elektrodenkonstellationen (Elektrodenpaare) zur Einleitung des elektrischen Stromes in das elektrisch leitfähige Material 3 zu verwenden. Dabei kann der eingeleitete elektrische Strom sowohl Wechselstrom, wie auch Gleichstrom sein.

Die jeweilig erforderlichen Elektrodenkonstellationen (Elektrodenbeschaltung) sowie die Strom-/Zeitparameter können in der Steuerung der Steuer- und Versorgungseinheit 2 als vorgegebenes Rezept (Schweißprogramm) hinterlegt sein. Ferner kann auch abhängig von der gemessenen Temperatur über den Temperatursensor 21 eine Regelung der entsprechenden Parameter bzw. der Elektrodenbeschaltung durch die Steuer- und Versorgungseinheit 2 erreicht werden.

Im Zusammenhang mit der Temperaturmessung durch den Temperatursensor 21 kann somit die Steuer- und Versorgungseinheit 2 über die Steuer- und Versorgungsleitung 22 die jeweiligen Elektroden 11 bis 16 in einer jeweilig schnell wechselnden Elektrodenkonstellation paarweise ansteuern. Durch die Temperaturüberwachung kann in die Steuer- und Versorgungseinheit 2 auch eine Regelung des Erwärmungsvorganges während der elektrischen Widerstandserwärmung durchgeführt werden, in dem der Stromfluss durch eine geeignete Auswahl der jeweils angesprochenen Elektrodenkonstellation (Elektrodenpaare), die mit dem elektrischen Strom beaufschlagt sind, ausgeführt werden. Somit kann über die Steuer- und Versorgungseinheit 2 die Steuerung der Bestromung der Elektrodenpaare über eine geregelte bzw. gesteuerte Stromquelle sowie die Reihenfolge und die Zuordnung der Elektrodenpaarung (unterschiedlicher Elektrodenkonstellationen) gesteuert bzw. geregelt werden. Bevorzugt kann die Steuer- und Versorgungseinheit 2 eine Hard- und Software basiertes Steuerungs- und Regelungssystem mit temperaturgeführter Regelung enthalten.

Um eine qualitative Aussage über den Prozess des thermischen Direktfügens eines Kunststoffbauteils 4, beispielsweise Kunststoffbolzens, auf einem metallischen Blechbauteil treffen zu können, kann der jeweils aufgewendete Stromfluss, die Anpresskraft und die erreichten Temperaturen aufgezeichnet und für eine spätere Dokumentation des Fügeprozesses zur Verfügung stehen.

### Bezugszeichenliste

- 1: Elektrodenanordnung
- 11: erste Elektrode
- 12: zweite Elektrode
- 13: dritte Elektrode
- 14: vierte Elektrode
- 15: fünfte Elektrode
- 16: sechste Elektrode
- 17: Isolator
- 18: Freiraum

- 2: Steuer- und Versorgungseinheit
- 21: Temperatursensor
- 22: Steuer- und Versorgungsleitung

- 3: elektrisch leitfähiges Material, Blech
- 31: Oberfläche

- 4: Kunststoffbauteil

- A: Anpressdruck
- Z: Zufuhrrichtung

## Patentansprüche

1. Verfahren zur elektrischen Widerstandserwärmung eines elektrisch leitfähigen, flächigen Materials (3), insbesondere Blech, und zum thermischen Direktfügen eines Kunststoffbauteils (4) auf das erwärmte, flächige Material (3), bei dem eine erste und eine zweite Elektrode (11, 12) mit einem Freiraum (18) voneinander beabstandet auf einer Oberfläche (31) des flächigen Materials (3) aufgesetzt werden und ein elektrischer Strom über die erste und zweite Elektrode (11, 12) zur Erwärmung des Materials (3) in das Material einleitbar ist, **dadurch gekennzeichnet, dass** mit wenigstens einer weiteren Elektrode (13, 14, 15, 16), die alle in einer Elektrodenanordnung (1) um den Freiraum (18) verteilt und auf der einen Oberfläche (31) auf dem flächigen Material (3) aufgesetzt angeordnet sind, das flächige Material (3) erwärmt wird, wobei unterschiedliche Elektrodenkonstellationen der wenigstens drei Elektroden (11, 12, 13, 14, 15, 16) jeweils paarweise abwechselnd mit dem elektrischen Strom beaufschlagt werden, und über den Freiraum (18) das Kunststoffbauteil (4) auf das erwärmte, flächige Material (3) zum thermischen Direktfügen dieses Kunststoffbauteils (4) darauf zugeführt wird.

2. Verfahren nach Anspruch 1, **dadurch gekennzeichnet, dass** der Wechsel zwischen verschiedenen Elektrodenkonstellationen in Zeitintervallen von 10⁻⁷ s bis 1 s, insbesondere 10⁻⁵ s bis 10⁻² s durchgeführt wird.

3. Verfahren nach Anspruch 1 oder 2, **dadurch gekennzeichnet, dass** zum thermischen Direktfügen des Kunststoffbauteils (4) ein elektrischer Strom von 200 A bis 5000 A bei einer niedrigen Spannung von unter 10 V für 0,5 s bis 10 s über die verschiedenen Elektrodenkonstellationen dem flächigen Material (3) angelegt werden.

4. Verfahren nach einem der vorangehenden Ansprüche, **dadurch gekennzeichnet, dass** die Elektrodenanordnung (1) auf dem flächigen Material (3) aufgepresst wird.

5. Vorrichtung zur elektrischen Widerstandserwärmung eines elektrisch leitfähigen, flächigen Materials (3), insbesondere Blech, bei dem eine erste und eine zweite Elektrode (11, 12) mit einem Freiraum (18) voneinander beabstandet zum Aufsetzen auf einer Oberfläche (31) des flächigen Materials (3) vorgesehen sind und ein elektrischer Strom von einer Steuer- und Versorgungseinheit (2) über die erste und zweite Elektrode (11, 12) zur Erwärmung des Materials in das Material (3) einleitbar ist, **dadurch gekennzeichnet, dass** weitere, voneinander elektrisch getrennte Elektroden (13, 14, 15, 16) in einer Elektrodenanordnung (1) um den Freiraum (18) angeordnet sind, und der Freiraum (18) normal zum flächigen Material (3) einen freien Zugang zur Oberfläche (31) des flächigen Materials (3) in diesem Bereich erlaubt.

6. Vorrichtung nach Anspruch 5, **dadurch gekennzeichnet, dass** die Elektrodenanordnung (1) ringförmig um den Freiraum (18) ausgebildet ist.

7. Vorrichtung nach Anspruch 5 oder 6, **dadurch gekennzeichnet, dass** die Elektrodenanordnung (1) kreisringförmig ausgebildet ist, wobei die einzelnen Elektroden (11, 12, 13, 14, 15, 16) segmentiert und voneinander elektrisch isoliert mit Isolatoren (17) in dieser Elektrodenanordnung (1) aufgenommen sind.

8. Vorrichtung nach Anspruch 5, 6 oder 7, **dadurch gekennzeichnet, dass** die Elektrodenanordnung (1) 4 bis 24 Elektroden (11, 12, 13, 14, 15, 16), insbesondere 6 bis 12 Elektroden aufweist.

9. Vorrichtung nach Anspruch 5, 6, 7 oder 8, **dadurch gekennzeichnet, dass** die Elektroden (11, 12, 13, 14, 15, 16) in der Elektrodenanordnung (1) federnd gelagert sind.

## Claims

1. Method for the electrical resistance heating of an electrically conductive, flat material (3), in particular sheet metal, and for the thermal direct joining of a plastic component (4) to the heated, flat material (3), in which a first and a second electrode (11, 12) are placed on a surface (31) of the flat material (3) at a distance from one another with a free space (18) and an electric current can be introduced into the material via the first and second electrodes (11, 12) to heat the material (3), **characterised in that** at least one further electrode (13, 14, 15, 16), which are all distributed in an electrode arrangement (1) around the free space (18) and are arranged on the one surface (31) on the flat material (3), the flat material (3) is heated, wherein different electrode constellations of the at least three electrodes (11, 12, 13, 14, 15, 16) are each alternately supplied with the electric current in pairs, and the plastic component (4) is fed via the free space (18) onto the heated, flat material (3) for thermal direct joining of this plastic component (4) thereto.

2. Method according to claim 1, **characterised in that** the change between different electrode constellations is carried out at time intervals of 10⁻⁷ s to 1 s, in particular 10⁻⁵ s to 10⁻² s.

3. Method according to claim 1 or 2, **characterised in that** for the thermal direct joining of the plastic component (4), an electric current of 200 A to 5000 A at a low voltage of less than 10 V is applied to the flat material (3) for 0.5 s to 10 s via the various electrode constellations.

4. Method according to one of the preceding claims, **characterised in that** the electrode arrangement (1) is pressed onto the flat material (3).

5. Device for the electrical resistance heating of an electrically conductive, flat material (3), in particular sheet metal, in which a first and a second electrode (11, 12) are provided with a free space (18) from one another for placing on a surface (31) of the flat material (3) and an electrical current can be introduced into the material (3) from a control and supply unit (2) via the first and second electrodes (11, 12) for heating the material, **characterised in that** further electrodes (13, 14, 15, 16) electrically separated from one another are arranged in an electrode arrangement (1) around the free space (18), and the free space (18) allows free access to the surface (31) of the flat material (3) in this region perpendicular to the flat material (3).

6. Device according to claim 5, **characterised in that** the electrode arrangement (1) is formed in an annular shape around the free space (18).

7. Device according to claim 5 or 6, **characterised in that** the electrode arrangement (1) is circular ring-shaped, the individual electrodes (11, 12, 13, 14, 15, 16) being segmented and electrically insulated from one another by insulators (17) in this electrode arrangement (1).

8. Device according to claim 5, 6 or 7, **characterised in that** the electrode arrangement (1) has 4 to 24 electrodes (11, 12, 13, 14, 15, 16), in particular 6 to 12 electrodes.

9. Device according to claim 5, 6, 7 or 8, **characterised in that** the electrodes (11, 12, 13, 14, 15, 16) are resiliently mounted in the electrode arrangement (1).

## Revendications

1. Procédé de chauffage par résistance électrique d'un matériau plat électriquement conducteur (3), en particulier une tôle, et d'assemblage thermique direct d'un composant en plastique (4) sur le matériau plat chauffé (3), procédé dans lequel une première et une deuxième électrode (11, 12) sont placées sur une surface (31) du matériau plat (3), à distance l'une de l'autre en laissant un espace libre (18), et un courant électrique peut être introduit dans le matériau par l'intermédiaire de la première et de la deuxième électrode (11, 12) pour chauffer le matériau (3), **caractérisé en ce que** le matériau plat (3) est chauffé par au moins une électrode supplémentaire (13, 14, 15, 16), toutes réparties dans un agencement d'électrodes (1) autour de l'espace libre (18) et disposées sur ladite une surface (31) sur le matériau plat (3), différentes configurations d'électrodes desdites au moins trois électrodes (11, 12, 13, 14, 15, 16) étant alternativement alimentées en courant électrique par paires, et le composant en plastique (4) étant amené par l'espace libre (18) sur le matériau plat chauffé (3) pour l'assemblage thermique direct de ce composant en plastique (4) sur celui-ci.

2. Procédé selon la revendication 1, **caractérisé en ce que** l'alternance entre différentes configurations d'électrodes est effectuée à des intervalles de temps de 10⁻⁷ s à 1 s, en particulier de 10⁻⁵ s à 10⁻² s.

3. Procédé selon la revendication 1 ou 2, **caractérisé en ce que**, pour l'assemblage thermique direct du composant en plastique (4), un courant électrique de 200 A à 5 000 A à une basse tension inférieure à 10 V est appliqué au matériau plat (3) pendant 0,5 s à 10 s via les différentes configurations d'électrodes.

4. Procédé selon l'une des revendications précédentes, **caractérisé en ce que** l'agencement d'électrodes (1) est pressé sur le matériau plat (3).

5. Dispositif de chauffage par résistance électrique d'un matériau plat électriquement conducteur (3), en particulier une tôle, dispositif dans lequel une première et une deuxième électrode (11, 12) avec un espace libre (18) les séparant l'une de l'autre sont prévues pour être placées sur une surface (31) du matériau plat (3) et un courant électrique provenant d'une unité de commande et d'alimentation (2) peut être introduit dans le matériau (3) via la première et la deuxième électrode (11, 12) pour chauffer le matériau, **caractérisé en ce que** d'autres électrodes (13, 14, 15, 16) séparées électriquement les unes des autres sont disposées dans un agencement d'électrodes (1) autour de l'espace libre (18), et l'espace libre (18) perpendiculaire au matériau plat (3) permet un accès libre à la surface (31) du matériau plat (3) dans cette zone.

6. Dispositif selon la revendication 5, **caractérisé en ce que** l'agencement d'électrodes (1) est disposé en forme d'anneau autour de l'espace libre (18).

7. Dispositif selon la revendication 5 ou 6, **caractérisé en ce que** l'agencement d'électrodes (1) est de forme circulaire, les différentes électrodes (11, 12, 13, 14, 15, 16) étant reçues dans cet agencement d'électrodes (1) en étant segmentées et isolées électriquement les unes des autres par des isolateurs (17).

8. Dispositif selon la revendication 5, 6 ou 7, **caractérisé en ce que** l'agencement d'électrodes (1) est muni de 4 à 24 électrodes (11, 12, 13, 14, 15, 16), en particulier de 6 à 12 électrodes.

9. Dispositif selon la revendication 5, 6, 7 ou 8, **caractérisé en ce que** les électrodes (11, 12, 13, 14, 15, 16) sont montées sur ressort dans l'agencement d'électrodes (1).
